# EUROPEAN PATENT SPECIFICATION

(11) **EP 2 973 188 B1**
(45) Date of publication and mention of the grant of the patent: **24.11.2021**
(21) Application number: 14716155.8
(22) Date of filing: 13.03.2014
(51) Int. Cl.: G06F 21/62, G06F 21/34, H04L 29/06

(54) **SECONDARY DEVICE AS KEY FOR AUTHORIZING ACCESS TO RESOURCES**
SEKUNDÄRE VORRICHTUNG ALS SCHLÜSSEL ZUR AUTORISIERUNG DES ZUGRIFFS AUF RESSOURCEN
DISPOSITIF SECONDAIRE COMME CLÉ D'AUTORISATION D'ACCÈS AUX RESSOURCES

(30) Priority: 15.03.2013 US 201313841853
(43) Date of publication of application: 20.01.2016
(73) Proprietor: Airwatch LLC, Atlanta, GA 30338 (US)
(72) Inventor: STUNTEBECK, Erich, Marietta, Georgia 30066 (US)
(74) Representative: Appleyard Lees IP LLP
(86) International application number: PCT/US2014/025256
(87) International publication number: WO 2014/151235

(56) References cited:
- WO-A2-96/00485
- GB-A- 2 361 558
- US-A1- 2002 049 580
- US-A1- 2005 097 327
- US-A1- 2007 130 473
- US-A1- 2008 010 689

## Description

### RELATED APPLICATION

This application claims priority to U.S. Application 13/841,853, filed March 15, 2013.

### BACKGROUND

Managing access to enterprise resources by network-connected devices is critical to ensure that only authenticated and authorized users and devices gain access to sensitive information or services. To date, this has typically been accomplished by utilizing network firewalls, reverse proxy servers with authentication, and encrypted VPN tunnels. Today, however, enterprise resources are being moved out of enterprise-managed data centers and into the "Cloud." These cloud-based network environments may not provide the configurability and customization necessary to sufficiently protect enterprise resources. For instance, protecting enterprise-managed data centers at a device level can be problematic. Cloud-based data services often do not provide the necessary features to allow enterprises to manage access to the services at a device level.

US 2002/0049580 A1 Kutaragi et al. describes systems for providing content to user terminals via a network. The claims have been characterised over this document.

### SUMMARY

According to the present invention there is provided a method as in claim 1, a client device as in claim 6, and a network server as in claim 11. Additional features of the invention will be apparent from the dependent claims, and the description that follows.

The disclosed embodiments relate to a system and associated devices and methods for managing access to resources in a networked environment. A client side application executed on a client device may transmit a request to an authorization service for access to a resource. The authorization service may then authenticate user credentials and/or a device identifier received from the client side application. Authenticating the user credentials and/or the device identifier may include determining that the user credentials and/or the device identifier is/are associated with the resource.

The client side application may then receive from the authorization service an indication that the client device must comply with a distribution rule associated with the resource, where the distribution rule requires a specified secondary client device to be in communication with the client device as a prerequisite to accessing the resource. In some cases, the fact that the specified secondary client device is in communication with the client device is all that is required to authorize the client side application (with the user and/or client device having been previously authenticated) to access the resource, which may be accessed by the client device from an enterprise server or from the local memory of the client device.

In some embodiments the client side application determines that the client device complies with the distribution rule and then communicates with the secondary client device to gain access to the secure copy of the resource. In some cases this involves the client side application receiving from the secondary client device an authorization credential to be used for receiving authorization to access the resource. In some embodiments, the client side application may transmit the authorization credential to a distribution service that will provide authorization to access the resource upon authenticating the authorization credential.

In some embodiments, the resource is stored in a secure format in a memory of the client device and the authorization credential received from the secondary client device is used to access the resource from the memory. The secondary client device may receive the authorization credential from the authorization service after the authorization service authenticates user credentials and/or a device identifier received from the secondary client device. This authentication may include determining that the user credentials and/or the device identifier received from the secondary client device is/are associated with the resource. In some embodiments, the authorization service further determines whether the secondary client device complies with additional distribution rules associated with the resources and/or the authorization credential. The authorization credential may be at least one of a PIN, a key, a password, a certificate, and a token.

In some embodiments the client device may transmit the secure resource to the secondary device and receive an accessible copy of the resource from the secondary client device. Again, the secondary client device may receive the authorization credential required for accessing secure resource from the authorization service. Alternatively, the authorization credential may be provisioned in the secondary client device.

In some embodiments, accessing the resource further comprises receiving an authorization credential the secondary client device and using the authorization credential to receive authorization.

In some embodiments, using the authorization credential to receive authorization to access the resource comprises transmitting the authorization credential to a distribution service that will provide authorization to access the resource upon authenticating the authorization credential.

In some embodiments, the resource is stored in a secure format in a memory of the client device, wherein using the authorization credential to receive authorization to access the resource comprises using the authorization credential to access the resource from the memory.

In some embodiments, wherein the secondary client device receives the authorization credential from the authorization service.

In some embodiments, a secure copy of the resource comprises an encrypted resource, and communicating with the secondary client device to gain access to the secure copy of the resource comprises receiving from the secondary device a decryption key and using the decryption key to decrypt the encrypted resource.

In some embodiments, the secure copy of the resource comprises an encrypted resource, and communicating with the secondary client device to gain access to the secure copy of the resource comprises transmitting the encrypted resource to the secondary device and receiving a decrypted copy of the resource from the secondary client device.

In some embodiments, the secondary client device receives a decryption key for decrypting the encrypted resource from the authorization service.

In some embodiments, communicating with the secondary client device to gain access to the secure copy of the resource comprises receiving from the secondary device an authorization credential required for accessing the secure copy of the resource.

In some embodiments the authorization credential comprises at least one of a PIN, a key, a password, a certificate, and a token.

In some embodiments, the authorization service further comprises executable instructions for authenticating at least one of user credentials and a device identifier received from the client side application via the network connectivity interface.

In some embodiments, authenticating at least one of user credentials and a device identifier comprises determining that at least one of the user credentials and the device identifier is associated with the resource.

In some embodiments, the authorization service further comprises executable instructions for authenticating at least one of user credentials and a device identifier received from the secondary client device via the network connectivity interface.

In some embodiments, authenticating at least one of user credentials and a device identifier comprises determining that at least one of the user credentials and the device identifier is associated with the resource.

In some embodiments, the secure copy of the resource comprises an encrypted resource, and the authorization credential comprises a decryption key required to decrypt the encrypted resource.

In some embodiments, the client device receives the authorization credential from the secondary device to gain access to the secure copy of the resource.

In some embodiments, the client device transmits the secure copy of the resource to the secondary client device and receives an unsecure copy of the resource from the secondary client device.

### BRIEF DESCRIPTION OF THE DRAWINGS

Many aspects of the present disclosure can be better understood with reference to the following diagrams. The drawings are not necessarily to scale, emphasis instead being placed upon clearly illustrating certain features of the disclosure. Moreover, in the drawings, like reference numerals designate corresponding parts throughout the several views.
FIG. 1 is a block diagram of a networked environment according to certain embodiments.
FIG. 2 is a flowchart illustrating an example of a method performed by a client side application attempting to access a resource stored on an enterprise server.
FIG. 3 is a flowchart illustrating another example of a method performed by a client side application attempting to access a resource stored on an enterprise server.
FIG. 4 is a flowchart illustrating an example of a method performed by an authorization service for authorizing or denying access to resources.
FIG. 5 shows schematic block diagrams illustrating certain components of an enterprise server and a client device employed in the networked environment of FIG. 1.

### DETAILED DESCRIPTION

Disclosed are various embodiments for a system and associated devices and methods for managing access to resources in a networked environment. In some embodiments, the system comprises an enterprise server, a primary client device and at least one secondary client device configured as described herein. The enterprise server may store or otherwise control access to resources, such as data, databases, application programs and application files, text files, word processor files, spreadsheet files, presentation files, graphic files, audio files, photographic files, video files and/or the like. The enterprise server may execute an authorization service for determining whether to authorize access to resources. The enterprise server may also execute a distribution service for providing resources to the client device(s) or providing the client device(s) with access to resources.

In some embodiments, a user operates a primary client device and executes a client side application that attempts to access at least one resource hosted on the enterprise server. The authorization service may first attempt to authenticate user credentials associated with the user of the primary client device and/or a device identifier that uniquely identifies the primary client device. User credentials may include one or more of a user name and password, biometric data, and/or other data used to identify the user. The device identifier may be a unique hardware identifier such as a GUID (Globally Unique Identifier), UUID (Universally Unique Identifier), UDID (Unique Device Identifier), serial number, IMEI (Internationally Mobile Equipment Identity), Wi-Fi MAC (Media Access Control) address, Bluetooth MAC address, a CPU ID, and/or the like, or any combination of two or more such hardware identifiers. Additionally, the device identifier may be represented by a unique software identifier such a token or certificate, based at least in part on the aforementioned unique hardware identifiers.

As an additional security measure, the authorization service may require a secondary client device, which may be a specific client device or one of a group of specific client devices (collectively referred to herein as a "key device") to be in communication with the primary client device as a prerequisite to accessing the requested resource(s). If the primary client device is in communication with the key device, the primary client device may then be authorized to access the resources. Alternatively, the primary client device may be required to interact with the key device to gain access to the requested resource(s), as described herein.

In some embodiments where the primary client device is required to interact with the key device to gain access to the requested resource(s), the primary client device may obtain from the key device an authorization credential, such as a decryption key, PIN, password, certificate and/or token, etc., required for access to the requested resource(s). For example, the primary client device may provide the authorization credential to the authorization service or the distribution service to gain access to the requested resource(s).

In some embodiments, the authorization service may instruct the distribution service to provide the requested resource(s) to the primary client device in an encrypted or otherwise secure format. The primary client device may obtain a decryption key or another authorization credential from the key device, which may be used to decrypt the resource(s) or otherwise access the resource(s). As another example, the primary client device may transfer the encrypted or otherwise secure resource(s) to the key device, which may decrypt or otherwise render the resource(s) accessible (unsecure) and return the unsecure resource(s) to the primary client device. In such cases, the key device may already be provisioned with a copy of the decryption key or other applicable authorization credential, or may obtain the decryption key or other authorization credential from the authorization service.

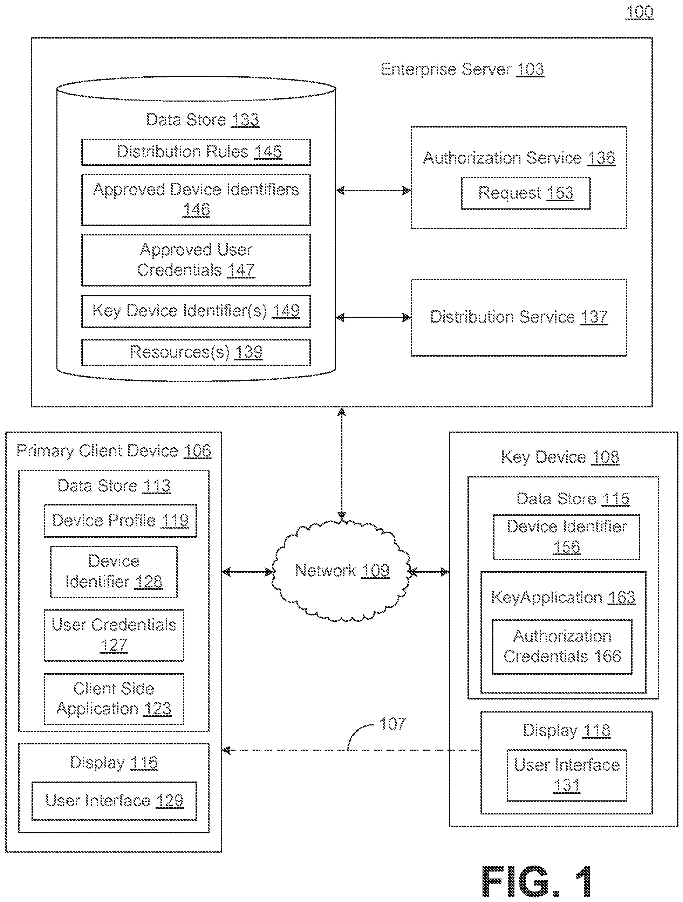

FIG. 1 illustrates an example of networked environment 100 according to various embodiments. The networked environment 100 includes an enterprise server 103, a primary client device 106, at least one secondary client device (which functions as the key device 108) and a network 109. The network 109 may be or include, for example, any type of wireless network such as a wireless local area network (WLAN), a wireless wide area network (WWAN) or any other type of wireless network now known or later developed. Additionally, the network 109 may be or include the Internet, intranets, extranets, microwave networks, satellite communications, cellular systems, PCS, infrared communications, global area networks, or other suitable networks, etc., or any combination of two or more such networks. The network 109 facilitates transmission of communications and resources between one or more client devices 106, 108 and the enterprise server 103.

By way of example, a client device 106, 108 may be a desktop computer, a laptop computer, a personal digital assistant, a cellular telephone, a set-top box, a music player, a web pad, a tablet computer system, a game console, and/or another device with like capability. A client device 106, 108 may include a wired network connectivity component (not shown in FIG. 1), for example, an Ethernet network adapter, a modem, and/or the like. A client device 106,108 may further include a wireless network connectivity interface (not shown in FIG. 1), for example, a PCI (Peripheral Component Interconnect) card, USB (Universal Serial Bus) interface, PCMCIA (Personal Computer Memory Card International Association) card, SDIO (Secure Digital Input-Output) card, NewCard, Cardbus, a modem, a wireless radio transceiver, and/or the like. A client device 106,108 may thus be operable to communicate via wired connection with the enterprise server 103 with the aid of the wired network connectivity component. A client device 106,108 may be further operable to communicate wirelessly with the enterprise server 103 with the aid of the wireless network connectivity component.

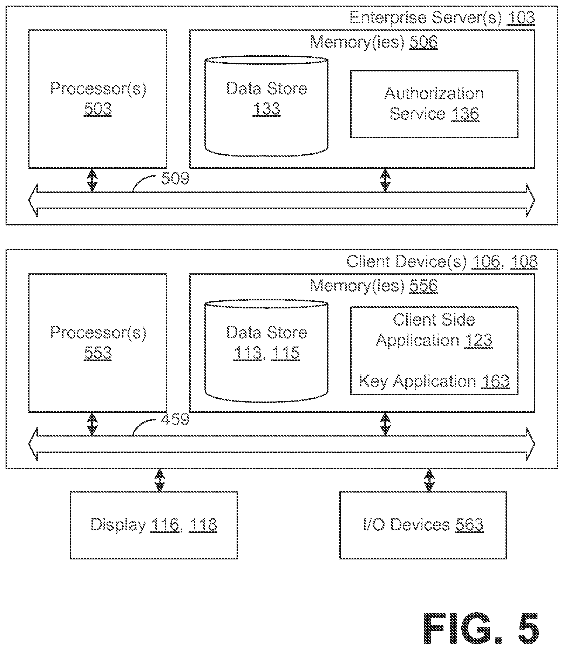

Additionally, a client device 106,108 may further comprise a memory for storing data and application programs, a processor for executing application programs and other executable instructions stored in the memory, and a local interface such as a bus, as will be described with respect to FIG. 5. A client device 106,108 may also include a display 116, 118 for rendering user interfaces 129, 131. The memory of the client device 106,108 may contain a data store 113, 115. In certain embodiments, the data store 113, 115 may store certain data and application programs. In the case of the primary client device 106 and for purposes of the present discussion, the data store 113 may store a device profile 119, user credentials 127, a device identifier 128, an application program for accessing and managing access to resources (referred to herein as a "client side application" 123), as well as other application programs and data. In the case of the key device 108 and for purposes of the present discussion, the data store 115 may store a device identifier 156, an application program for enabling or facilitating access to resources (referred to herein as a "key application" 163), as well as other application programs and data.

The device profile 119 may indicate various hardware, software, and security attributes or other configurations of the primary client device 106. For instance, the device profile 119 may indicate hardware specifications of the primary client device 106, version and configuration information of various software programs and hardware components installed, enabled and/or executing on the primary client device 106, transport protocols enabled on the primary client device 106, version and usage information of various other resources stored on the primary client device 106, and/or any other attributes associated with the state of the primary client device 106. The information included in the device profile 119 and other data stored on or accessible to the primary client device may be used to verify that the primary client device 106 complies with one or more distribution rule(s) 145 that may be associated with certain resources 139.

Distribution rules 145 may specify certain hardware, software and other device parameters or configurations with which the primary client device 106 or any other client device must comply before it will be authorized to access any resources 139 associated with such distribution rules 145. In some embodiments, a distribution rule 145 associated with a resource 139 may specify that the primary client device 106 must be in communication with a key device 108 as a prerequisite to the client side application 123 or any other application program executed by the primary client device 106 gaining access to that resource 139. For example, the resource 139 may not be provided or made accessible to the client side application 123 unless and until compliance with the distribution rule 145 is confirmed.

In some embodiments, the client side application 123 will be authorized to access the resource 139 as long as the primary client device 106 is in communication with the key device 108. The authorization service 136 may facilitate access to the resource 139 by the client side application 123, for example via the distribution service 137. Alternatively, the authorization service 136 or may authorize or enable the client side application 123 to access the resource 139 from the local memory of the primary client device.

As used herein the phrase "in communication" is meant in its broadest sense, i.e., that at least one signal transmitted by one device is received by another device. An active two-way communication session is not required. Thus, for instance, one client device (e.g., the key device 108) may broadcast a beacon or some other self-identifying signal that may be received by another device (e.g., the primary client device 106) and, in the context of this disclosure, the devices are considered to be in communication with each other. Therefore, the client side application 123 may simply search a listing of potential Bluetooth or proximity based communication pairings, etc. to confirm that the specified key device 108 is broadcasting a signal and is within the presence of the primary client device 106. Therefore, based on the detected presence of the key device 108, the client side application 123 may confirm compliance with the distribution rule 145 and thereby gain access to the resource 139.

In some embodiments the distribution rule 145 may additionally or alternatively require that the primary client device 106 is within a certain distance of the key device 108 or that both devices be within a certain area (e.g., within an office building, meeting room, etc.), which the primary client device 106 and/or the authorization service 136 may determine using GPS coordinates, cell tower triangulation or any other appropriate position detection technology. In some embodiments the distribution rule may additionally or alternatively require that the primary client device 106 detect a specified threshold signal strength (e.g., Bluetooth, WiFi, NFC, etc.) from the key device 108 in order to be considered as being in communication with the key device 108.

In some embodiments, the client side application 123 will be required to interact with the secondary client device 106 to gain access to the resource 139. For example, the client side application 123 may receive an authorization credential 166 from a key application 163 executed on the key device 108 and may then provide it to the distribution service 137 or authorization service 136. As another example, the resource 139 may be provided to the client side application 123 in a secure format (e.g., encrypted, password protected, etc.) and the client side application 123 will be required to cooperate with the key application 163 executed by the key device 108 to gain access to the secure resource 139. The key application 163 may be configured for retrieving applicable authorization credentials (e.g., decryption keys, PINs, passwords, certificates, and/or tokens, etc.) from the data store 115 of the key device 108 or may request such items from the authorization service 136 as needed.

In some embodiments, the client side application 123 may be executed to transmit to the enterprise server 103 a request 153 for access to at least one resource 139. The client side application 123 may also include functionality for rendering a user interface 129 on the display 116 and for displaying resources 139 therein. In some embodiments, the client side application 123 may render an interface that presents an array of resources 139 in a single view, such as in a category-based tree or outline format. As will be appreciated, the client side application 123 may also include functionality for receiving and responding to user input commands generated by various input/output devices.

In some embodiments, the client side application 123 may be a secure container program that may be authorized to receive and render selected resources 139. The secure container program may also execute other application programs within its secure environment, where such application programs are stored locally on the client device 106 and/or on the enterprise server 103 or another network device. By way of example, such other applications may include web browsing applications, email applications, instant messaging applications, and/or other applications capable of receiving and/or rendering resources 139 on the display 116.

In some embodiments, where the client side application 123 is not a secure container program, the client side application 123 may be configured with instructions for communicating with and executing commands received from the authorization service 136 for performing the authorization methods described herein. Such instructions may be included in or called by the program code of the client side application 123 or may be provided by a wrapper applied to the client side application 123.

The enterprise server 103 may comprise, for example, a server computer or any other system providing and authorizing access to resources 139. Alternatively, a plurality of enterprise servers 103 may be employed that are arranged, for example, in one or more server banks or computer banks or other arrangements. For example, a plurality of enterprise servers 103 together may comprise a cloud computing resource, a grid computing resource, and/or any other distributed computing arrangement. Such enterprise servers 103 may be located in a single installation or may be distributed among many different geographic locations. For purposes of convenience, the enterprise server 103 is referred to herein in the singular. Even though the enterprise server 103 is referred to in the singular, it is understood that a plurality of enterprise servers 103 may be employed in the arrangements as descried herein.

The enterprise server 103 may execute various application programs, services and other processes. For example the enterprise server 103 may execute the authorization service 136 and a distribution service 137 that distributes resources 139 to client devices 106 or otherwise provides client devices 106 with access to resources 139. It should be understood that in some embodiments, the authorization service 136 may be executed on one or more other network devices, such as a proxy server and/or a compliance server. It should also be understood that, in some embodiments, the functions of and processes performed by the authorization service 136 described herein may be distributed among a plurality of different services, including an authentication service for authenticating user and device credentials and/or a compliance service for determining whether primary client device 106 and other client devices (e.g., the key device 108) complies with resource distribution rules and other requirements.

Also, certain data may be stored in a data store 133 that is contained in or otherwise accessible to the enterprise server 103. The illustrated data store 133 may be representative of a plurality of data stores, as can be appreciated. The data store 133 may utilize strong encryption standards to protect against unauthorized access. For example, the data store 133 may utilize the Advanced Encryption Standard (AES-256) or Standard Hash Algorithm (SHA-1) or any similar strong encryption standard commonly utilized for server-side data storage.

In some embodiments, the data stored in the data store 133 includes resources 139, a listing of approved device identifiers 146, a listing of approved user credentials 147, a listing of key device identifiers 149 and distribution rules 145. The approved user credentials 147 represents user credentials that have been previously approved for accessing certain resources 139. Similarly, the listing of approved device identifiers 146 represents a listing of device identifiers that have been previously approved for accessing certain resources 139. Accordingly, user credentials 127 and device identifiers 128 received from the primary client device 106 (i.e., in connection with requests 153 for access to resources 139) are authenticated by comparing them to the listing of approved user credentials 147 and the listing of approved device identifiers 146, respectively. In some embodiments, the data store 133 may store a listing of approved pairings of user credential and identifiers and the authentication process may involve determining whether the user credentials 127 and the device identifiers 128 received from primary client device 106 match any of the approved pairings. As will be appreciated, the key device 108 and/or its user may be authenticated in the same way.

The listing of key device identifiers 149 represents a listing of key devices that may be required to be in communication with the primary client device 106 in order to "unlock" access to certain resources 139. In the example where a primary client device 106 is a laptop computer or a tablet computer, a key device 108 may be, for instance, the user's mobile phone. Any secondary client device capable of executing the key application 163 for obtaining and providing authorization credentials 166 and/or accessing secure resources may function as the key device 108. In some embodiments, a service provider or network administrator responsible for maintaining the security of the resources 139 on the enterprise server 103 may specify which secondary client device(s) may function as the key device 108 for a particular user and/or primary client device 106. In some embodiments, more than one key device 108 may be specified and/or required for compliance with a distribution rule 145.

Accordingly, the authorization service 136 may receive from the primary client device 106 a request 153 to access certain resources 139. In some embodiments, the request 153 may include or be sent along with user credentials 127, a device identifier 128 and/or an indication of the requested resource(s) 139. In some embodiments, the authorization service 136 may request some or all of such information from the primary client device 106 in response to receiving the access request 153. The authorization service 136 authenticates the user credentials 127 and/or the device identifier 128, as described.

As discussed, the authorization service 136 may also require the primary client device 106 to comply with certain distribution rules 145 before it authorizes the primary client device 106 to access the requested resource(s) 139. The information required for the compliance check may be included, for example, in the device profile 119 or otherwise stored in the data store 113 of the primary client device 106. In some cases, the information required for this compliance check may be provided by the primary client device 106 to the authorization service 136 as part of or along with the access request 153. In some cases, the authorization service 136 may request such information from the primary client device 106 when requesting user credentials 127 and/or the device identifier 128 or in response to authenticating the user credentials 127 and/or the device identifier 128.

In some embodiments, one or more distribution rules 145 or associated key device identifiers 149 may be provided to the primary client device 106 so that an application program (e.g., the client side application 123) or other process executed by the primary client device 106 may perform the compliance check. In these embodiments, the requested resource(s) 139 may not be provided to or otherwise made accessible to the primary client device 106 until the authorization service 136 receives a notice from the primary client device 106 confirming compliance. In other cases, the requested resource(s) 139 may be provided to or accessed by the primary client device 106 in a secure format before the compliance check is performed (e.g., the applicable distribution rule(s) 145 or key device identifier(s) 149 may be provided contemporaneously with the secure resource(s) 139), but the client side application 123 or other application executed by the primary client device 106 may not have the authorization credential 166 required to access or use the resource(s) 139.

A distribution rule 145 associated with at least one requested resource 139 may specify that a key device 108 (which may be identified by a key device identifier 149) must be in communication with the primary client device as a prerequisite to accessing the requested resource(s) 139. In some embodiments, the client side application 123 or another process executed by the primary client device 106 may be configured for receiving the distribution rule 145 or key device identifier 149 and determining whether the specified key device 108 is in communication with the primary client device 106. Communication between the key device 108 and the primary client device 106 may be via any suitable wired or wireless network 109 or any direct wired or wireless communication link 107 between the devices. For example, a direct wireless connection 107 may be achieved WiFi, Bluetooth, infrared signal exchanges, Near Field Communication, or any other suitable direct wireless communication link.

In some embodiments, the authorization service 136 may instruct the distribution service 137 to provide the resource(s) 139 in a secure format or provide access to the secure resource(s) 139 to the client side application 123 contemporaneously with the distribution rule 145 or key device identifier 149. In such cases, the client side application 123 may be configured to interact with the key application 163 executed by the key device 108 to gain access to the secure resource 139, as described. In some embodiments, the client side application 123 may be configured to receive an authorization credential 166 from the key application 163 and to provide that authorization credential 166 to the distribution service 137 or the authorization service 136 (which may pass the authorization credential to the distribution service 137 on behalf of the client side application 123) in order to gain access to the requested resource(s) 139.

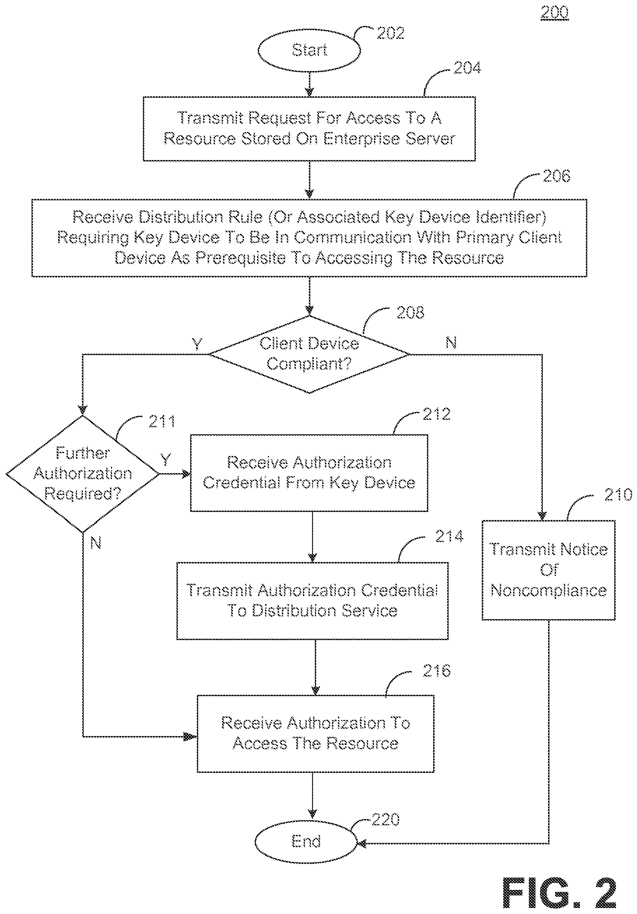

FIG. 2 is a flowchart illustrating an example of a method performed by a client side application 123 attempting to access a resource 139. The method begins at start step 202, where the client side application 123 is executed and determines (e.g., in response to a user input command or other run-time requirement) that it requires access to one or more resources 139, which may be stored on the enterprise server 103 or locally on the primary client device 106. At step 204, the client side application 123 transmits a request 153 to the enterprise server 103 (or directly to the authorization service 139, for example, in cases where its port is known to the client side application 123 or other process executed by the primary client device 106) for access to the required resource(s) 139. The request may include user credentials 127, a device identifier 128 and/or an indication of the resource(s) 139 to which access is requested.

Provided that the user and/or the client device 106 have been authenticated by the authorization service 136, the method moves to step 206, where the client side application 123 receives a distribution rule 145 (or the key device identifier 149 associated therewith), requiring confirmation that a key device 108 is in communication with the primary client device 106.

Next, in step 208, the client side application 123 determines whether the specified key device 108 is in communication with the primary client device 106. This of course may be done by checking all active communication ports, communication links, and potential communication pairings, etc. to determine the identity (e.g., by way of device identifiers) of any device in communication with the primary client device 106. In some embodiments, the client side application 123 or other process executed by the primary client device 106 determines that the primary client device 106 is in communication with the key device 108 by matching the key device identifier 149 with the device identifier 156 of the key device 108. If it is determined in step 208 that the primary client device 106 is not in compliance with the distribution rule 145, the method moves to step 210 where a notice of noncompliance is transmitted to the authorization service 136 (and may be displayed on the display 116 for the user). From step 210, the method ends at step 220.

However, if it is determined in step 208 that the primary client device 106 is in compliance with the distribution rule 145, the method proceeds to step 211, where a determination is made as to whether further authorization is required for the client side application 123 to access the resource(s) 139. For example, compliance with the distribution rule 145 may require only that the primary client device 106 is in communication with the key device 108 and, if that is confirmed, the authorization service 136 may provide authorization for the client side application 123 to access the resource(s) 139. In other cases, the client side application 123 may need a further authorization credential 166 to access resource(s) 139 via the distribution service 137 or to access secure resource(s) 139 stored locally on the primary client device 106.

Therefore if it is determined in step 211, that further authorization is not required, the method moves to step 216 where the client side application 123 receives authorization to access to the requested resource(s) 139. However if it is determined in step 211, that further authorization is required, the method moves to step 212, where an authorization credential 166 is received from the key device 108 (e.g., by the key application 163). As described, the authorization credential 166 may be stored in the data store 115 of the key device 108, or the key application 163 may be configured to request it from the authorization service 136. Then in step 214, the client side application 123 transmits the authorization credential 166 to the distribution service 137 or the authorization service 136 and in step 216, if the authorization credential is authenticated, receives authorization to access to the requested resource(s) 139. From step 216, the method ends at step 220.

In some embodiments, the requested resource(s) 139 may have previously been stored in the data store 113 of the primary client device 106, but the client side application 123 may not have been able to access the resource(s) until receiving authorization from the authorization service 136 or until receiving the authentication credential 166 from the key device 108, by way of above described or similar method.

In some embodiments, the state of the primary client device 106 may be modified after the client side application 123 is authorized to access certain resources 139. For example, the primary client device 106 may lose communication with the key device 108 in contravention of the applicable distribution rule 145. As another example, an unauthenticated user may log-on to the primary client device 106. Accordingly, in some embodiments, the authorization service 136 and the client side application 123 may periodically communicate in order to reconfirm authentication of the user and/or primary client device 106 and/or compliance with the applicable distribution rule 145. These subsequent authentications and/or compliance checks may be performed as described above (e.g., by the client side application 123 and/or the authentication service 136) and, in some embodiments, may be run as background processes so as to not require further input from the user. In some embodiments, the authorization granted to the client side application 123 for accessing the requested resource(s) 139 may be revoked and the resource(s) 139 may be deleted from the primary client device 106 and the key device, if applicable, whenever the primary client device 106 is determined to be noncompliant with the applicable distribution rule 145.

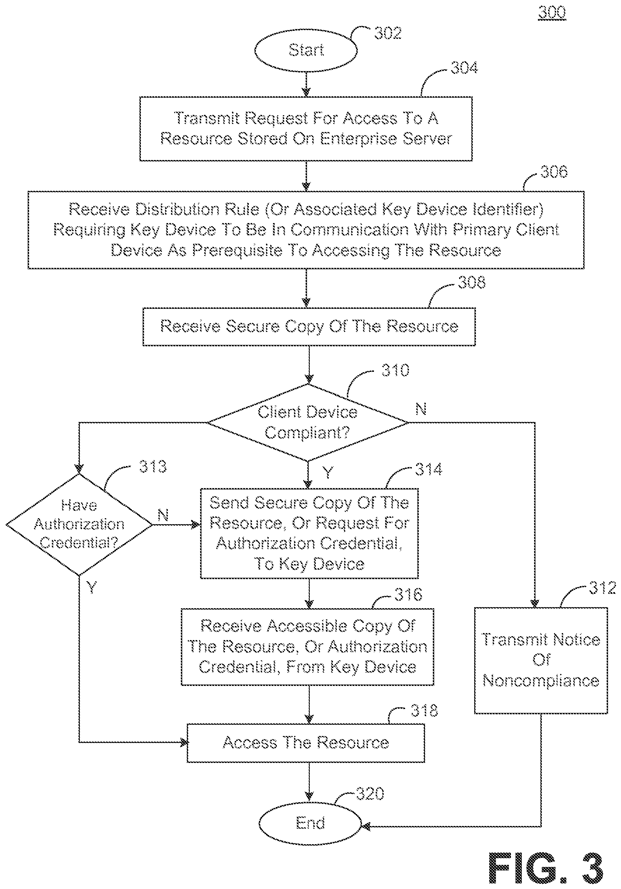

FIG. 3 is a flowchart illustrating another example of a method performed by a client side application 123 attempting to access a resource 139 stored on an enterprise server 103. The method begins at start step 302, where the client side application 123 is executed and determines (e.g., in response to a user input command or other run-time requirement) that it requires access to one or more resources 139 stored on the enterprise server 103. At step 304, the client side application 123 transmits a request 153 to the enterprise server 103 (or directly to the authorization service 139, for example, in cases where its port is known to the client side application 123 or other process executed by the primary client device 106) for access to the required resource(s) 139. The request may include user credentials 127, a device identifier 128 and/or an indication of the resource(s) 139 to which access is requested.

Provided that the user and/or the primary client device 106 have been authenticated by the authorization service 136, the method moves to step 306, where the client side application 123 receives a distribution rule 145 (or the key device identifier 149 associated therewith), requiring confirmation that a key device 108 is in communication with the primary client device 106. Then, in step 308, the client side application 123 receives the requested resource(s) 139 in a secure format.

Next, in step 310, the client side application 123 determines whether the specified key device 108 is in communication with the primary client device 106. If it is determined in step 310 that the primary client device 106 is not in compliance with the distribution rule 145, the method moves to step 312 where a notice of noncompliance is transmitted to the authorization service 136 (and may be displayed on the display 116 for the user). From step 312, the method ends at step 320. However, if it is determined in step 310 that the primary client device 106 is in compliance with the distribution rule 145, the method proceeds to step 313, where a determination is made as to whether the client side application 123 has access to the authorization credential 166 required for accessing the secure resource 139. For example, the authorization credential 166 may be stored locally on the primary client device. If so, the method moves to step 318, where the client side application 123 uses the required authorization credential 166 to access the resource 139. If it is determined at step 313 that the client side application 123 does not have access to the authorization credential 166, the method proceeds to step 314, where secure resource(s) 139, or a request for the authorization credential 166, is transmitted to the key device 108.

As discussed, the key application 163 executed on the key device 108 may retrieve the applicable authorization credential 166 from the local data store 115 or may obtain it (or them) from the authorization service 136. In the case where the secure resource(s) 139 are provided to the key device 108, the key application 163 will use the applicable authorization credential 166 to render the resource(s) 139 accessible (unsecure). Therefore, in step 316, the client side application 123 receives either the accessible resource(s) 139, or the applicable authorization credential 166, from the key application 163. Then at step 318 that client side application 123 accesses the resource(s) 139 and, from there, the method ends at step 320.

As in the prior example method, in some embodiments, the authorization service 136 and the client side application 123 may periodically communicate in order to reconfirm authentication of the user and/or primary client device 106 and/or compliance with the applicable distribution rule 145. These subsequent authentications and/or compliance checks may be performed as described above (e.g., by the client side application 123 and/or the authentication service 136) and, in some embodiments, may be run as background processes so as to not require further input from the user. In some embodiments, the authorization granted to the client side application 123 for accessing the requested resource(s) 139 may be revoked and the resource(s) 139 may be deleted from the primary client device 106 whenever the primary client device 106 is determined to be noncompliant with the applicable distribution rule 145. In addition, in some embodiments, any and all copies of resource(s) 139 provided to the key device 108 may be removed from the key device 108 (e.g., by a function of the key application 163) after the key application 163 decrypts or renders them accessible and provides them back to the primary client device 106.

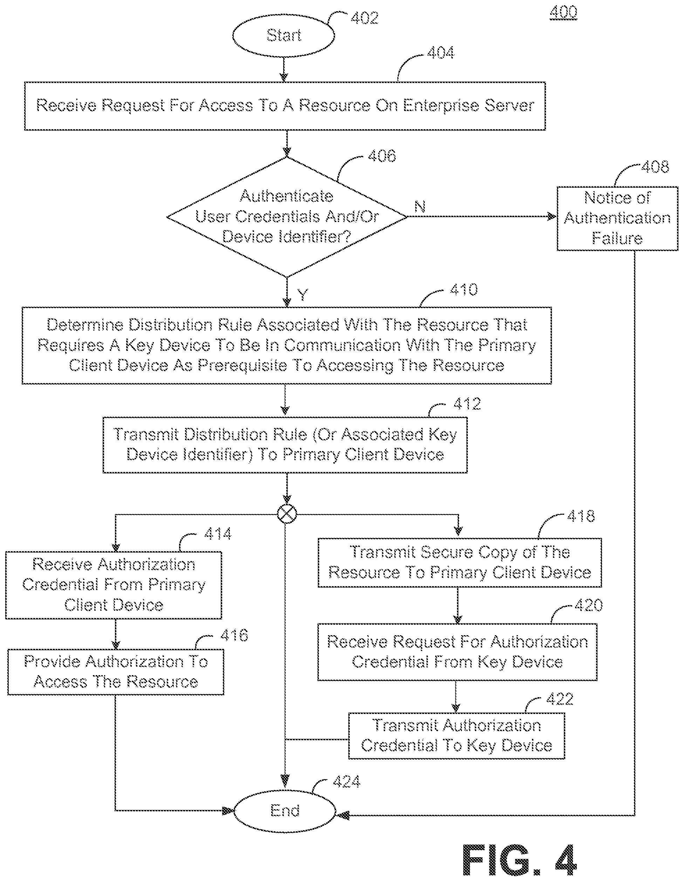

FIG. 4 is a flowchart illustrating an example of a method performed by an authorization service 136 for authorizing or denying access to resource(s) 139 stored on an enterprise server 103. From start step 402 the method moves to step 404, where the authorization service 136 receives a request 153 from a client side application 136 to access certain resource(s) 139 hosted by the enterprise server 103. As described, user credentials 127, a device identifier 128 and/or an indication of the requested resource(s) 139 may be included in or sent along with the access request 153. Alternatively, the authorization service 136 may request some or all of that information in response to receiving the access request 153.

Next, in step 406, the authorization service 136 determines whether the user credentials 127 and/or the device identifier 128 is/are authenticated. As described, this authentication step may involve not only determining that the user credentials 127 and/or the device identifier 128 is/are valid, but also determining if the user credentials 127 and/or the device identifier 128 is/are associated with the requested resource(s) 139. If not, the method moves to step 408 where a notification of authentication failure is transmitted to the client side application 123 and then the method ends at step 320. However, if the user credentials 127 and/or the device identifier 128 is/are authenticated in step 408, the method proceeds to step 410, where at least one distribution rule 145 associated with the requested resource(s) 139 is identified and such distribution rule(s) 145 require(s) at least one key device 108 be in communication with the primary client device 106 as a prerequisite to accessing the requested resource(s) 139.

Next in step 412, the distribution rule(s) 145 or key device identifier(s) 149 are transmitted to the client side application 123 or other process executed on the client device 106 so that the compliance check can be performed locally on the client device 106. The distribution rule 145 may further specify whether (i) no further authorization is required for the client side application 123 to access the requested resource(s) 139, (ii) requested resource(s) 139 are to remain on the enterprise server 103 until the client side application 123 provides a valid authorization credential 166, or (iii) whether the requested resource(s) 139 are to be provided to the client side application 123 in a secure format. If not further authorization is required, the method ends at step 424 and the client will be authorized to access the resource(s) 139.

If the requested resource(s) 139 are to remain on the enterprise server 103 until the client side application 123 provides a valid authorization credential 166, the method moves to step 414, where the authorization service 136 receives an authorization credential 166 from the client side application 123. Then at step 416, the authorization service 136 provides or facilitates the provision of authorization to access the requested resource(s) 139, for example by authenticating the authorization credential 166 or by transferring the authorization credential 166 to the distribution service 137 for authentication. From step 416 the method ends at step 424. As previously mentioned, the client side application 123 in some embodiments will provide an authorization credential 166 directly to the distribution service 137, meaning that steps 414 and 416 will not be performed.

Returning to step 412, if the distribution rule 145 indicates that the requested resource(s) 139 are to be provided to the client side application 123 in a secure format, the method moves to at step 418, where that action is performed. Then at step 420, the authorization service 136 receives from the key device 108 a request for an authorization credential 166 required for rendering accessible the secure resource(s) 139. At step 422 the requested authorization credential 166 is provided to the key device 108, preferably in response to authenticating user credentials and/or a device identifier 156 associated with the key device 108. For example the user may be prompted to input user credentials 127 to the key device 108 (e.g., via a user interface 131 of the key application 163), which may be transmitted to the authorization service 136, possibly along with the device identifier 156 of the key device 108. In some embodiments, the authorization service 136 will require the key device 108 to comply with additional distribution rules 145 associated with the resource(s) 139 and/or the key device 108. Following step 422, the method ends at step 424.

FIG. 5 shows schematic block diagrams illustrating certain components of an enterprise server 103 and each of the client devices 106, 108 employed in the networked environment of FIG. 1. The enterprise server 103 includes at least one processor circuit, for example, having a processor 503 and a memory 506, both of which are coupled to a local interface 509. To this end, the enterprise server 103 may comprise, for example, at least one server computer or like device. Similarly, the each of client devices 106, 108 includes at least one processor circuit, for example, having a processor 553 and a memory 556, both of which are coupled to a local interface 559. Additionally, each of the client devices 106, 108 may be in data communication with a display 116, 118 for rendering user interfaces 129, 131 (FIG. 1) and one or more other I/O devices 563 for inputting and outputting data. To this end, each of the client devices 106, 108 may comprise, for example, at least one client computer or like device.

The following is a general discussion of the components of the enterprise server 103 and each of the client devices 106, 108. The local interface 509 and 559 may comprise, for example, a data bus with an accompanying address/control bus or other bus structure as can be appreciated. Stored in the memory 506 and 556 are both data and several components that are executable by the processors 503 and 553. In particular, with regard to the enterprise server 103, stored in the memory 506 and executable by the processor 503 are an authorization service 139 and potentially other applications. Additionally, with regard to each of the client devices 106,108 stored in the memory 556 and executable by the processor 553 are a client side application 123 or a key application 163 and potentially other applications. Also stored in the memory 506 and 556 may be a data store 133 and 113, 115 and other data. In addition, an operating system may be stored in the memory 506 and 556 and executable by the processor 503 and 553.

It is to be understood that there may be other applications that are stored in the memory 506 and 556 and are executable by the processor 503 and 553 as can be appreciated. Where any component discussed herein is implemented in the form of software, any one of a number of programming languages may be employed such as, for example, C, C++, C#, Objective C, Java, Javascript, Perl, PHP, Visual Basic, Python, Ruby, Delphi, Flash, or other programming languages.

A number of software components are stored in the memory 506 and 556 and are executable by the processor 503 and 553. In this respect, the term "executable" means a program file that is in a form that can ultimately be run by the processor 503 and 553. Examples of executable programs may be, for example, a compiled program that can be translated into machine code in a format that can be loaded into a random access portion of the memory 506 and 556 and run by the processor 503 and 553, source code that may be expressed in proper format such as object code that is capable of being loaded into a random access portion of the memory 506 and 556 and executed by the processor 503 and 553, or source code that may be interpreted by another executable program to generate instructions in a random access portion of the memory 506 and 556 to be executed by the processor 503 and 553, etc. An executable program may be stored in any portion or component of the memory 506 and 556 including, for example, random access memory (RAM), read-only memory (ROM), hard drive, solid-state drive, USB flash drive, memory card, optical disc such as compact disc (CD) or digital versatile disc (DVD), floppy disk, magnetic tape, or other memory components.

The memory 506 and 556 are defined herein as including both volatile and nonvolatile memory and data storage components. Volatile components are those that do not retain data values upon loss of power. Nonvolatile components are those that retain data upon a loss of power. Thus, the memory 506 and 556 may comprise, for example, random access memory (RAM), read-only memory (ROM), hard disk drives, solid-state drives, USB flash drives, memory cards accessed via a memory card reader, floppy disks accessed via an associated floppy disk drive, optical discs accessed via an optical disc drive, magnetic tapes accessed via an appropriate tape drive, and/or other memory components, or a combination of any two or more of these memory components. In addition, the RAM may comprise, for example, static random access memory (SRAM), dynamic random access memory (DRAM), or magnetic random access memory (MRAM) and other such devices. The ROM may comprise, for example, a programmable read-only memory (PROM), an erasable programmable read-only memory (EPROM), an electrically erasable programmable read-only memory (EEPROM), or other like memory device.

Also, the processor 503 and 553 may represent multiple processors, and the memory 506 and 556 may represent multiple memories that operate in parallel processing circuits, respectively. In such a case, the local interface 509 and 559 may be an appropriate network 109 (FIG. 1) that facilitates communication between any two of the multiple processors 503 and 553, or between any two of the memories 506 and 556, etc. The local interface 509 and 559 may comprise additional systems designed to coordinate this communication, including, for example, performing load balancing. The processor 503 and 553 may be of electrical or of some other available construction.

Although the authorization service 136, distribution service 137, client side application 123, key application 163, and other various processes and functionality described herein may be embodied in software or code executed by general purpose hardware as discussed above, as an alternative the same may also be embodied in dedicated hardware or a combination of software/general purpose hardware and dedicated hardware. If embodied in dedicated hardware, each can be implemented as a circuit or state machine that employs any one of or a combination of a number of technologies. These technologies may include, but are not limited to, discrete logic circuits having logic gates for implementing various logic functions upon an application of one or more data signals, application specific integrated circuits having appropriate logic gates, or other components, etc. Such technologies are generally well known by those skilled in the art and, consequently, are not described in detail herein.

It is to be understood that the flowcharts of FIG. 2, FIG. 3 and FIG. 4 provide merely examples of the many different types of functional arrangements that may be employed to implement the operation of the client side application 123 and authorization service 136, respectively, as described herein. The flowcharts may also be viewed as depicting examples of methods implemented in the client device 106 and the enterprise server 103 (or other network device), respectively, according to one or more embodiments. If embodied in software, each method step or box of the flowcharts may represent a module, segment, or portion of code that comprises program instructions to implement the specified logical function(s). The program instructions may be embodied in the form of source code that comprises human-readable statements written in a programming language or machine code that comprises numerical instructions recognizable by a suitable execution system such as a processor 503 and 553 in a computer system or other system. The machine code may be converted from the source code, etc. If embodied in hardware, each block may represent a circuit or a number of interconnected circuits to implement the specified logical function(s).

Although the flowcharts of FIG. 2, FIG. 3 and FIG. 4 show a specific order of execution, it is understood that the order of execution may differ from that which is depicted. For example, the order of execution of two or more steps may be scrambled relative to the order shown. Also, two or more blocks shown in succession in FIG. 2, FIG. 3 or FIG. 4 may be executed concurrently or with partial concurrence. Further, in some embodiments, one or more of the steps shown in FIG. 2, FIG. 3 or FIG. 4 may be skipped or omitted. In addition, any number of counters, state variables, warning semaphores, or messages might be added to the logical flow described herein, for purposes of enhanced utility, accounting, performance measurement, or providing troubleshooting aids, etc. It is understood that all such variations are within the scope of the present disclosure.

Also, any logic or application described herein, including the authorization service 136, distribution service 137, client side application 123, and key application 163, that comprises software or code can be embodied in any non-transitory computer-readable medium for use by or in connection with an instruction execution system such as, for example, a processor 503 and 553 in a computer system or other system. In this sense, the logic may comprise, for example, statements including instructions and declarations that can be fetched from the computer-readable medium and executed by the instruction execution system. In the context of the present disclosure, a "computer-readable medium" can be any medium that can contain, store, or maintain the logic or application described herein for use by or in connection with the instruction execution system. The computer-readable medium can comprise any one of many physical media such as, for example, magnetic, optical, or semiconductor media. More specific examples of a suitable computer-readable medium would include, but are not limited to, magnetic tapes, magnetic floppy diskettes, magnetic hard drives, memory cards, solid-state drives, USB flash drives, or optical discs. Also, the computer-readable medium may be a random access memory (RAM) including, for example, static random access memory (SRAM) and dynamic random access memory (DRAM), or magnetic random access memory (MRAM). In addition, the computer-readable medium may be a read-only memory (ROM), a programmable read-only memory (PROM), an erasable programmable read-only memory (EPROM), an electrically erasable programmable read-only memory (EEPROM), or other type of memory device.

It should be emphasized that the above-described embodiments of the present disclosure are merely possible examples of implementations set forth for a clear understanding of the principles of the disclosure. Many variations and modifications may be made to the above-described and other possible embodiment(s) without departing substantially from the principles of the disclosure. All such modifications and variations are intended to be included within the scope of this disclosure and the following claims.

## Claims

1. A method of accessing a resource (139), the method being performed by a client side application (123) executed on a primary client device (106), the method comprising:
transmitting a request to an authorization service (136) executing on a network server (103) for access to a resource (139);
receiving from the authorization service (136) an indication that the primary client device (106) must comply with a distribution rule (145) associated with the resource (139);determining that the primary client device (106) complies with the distribution rule (145); and
in response to determining that the primary client device (106) complies with the distribution rule (145), accessing the resource (139);
**characterised in that:**
the distribution rule (145) requires a specified secondary client device (108) to be in communication with the primary client device (106) through a direct wireless network as a prerequisite to accessing the resource; and
accessing the resource comprises communicating with the specified secondary client device (108) to gain access to the resource using an authorization credential (166) which has been received from the authorization service (136) at the specified
secondary client device (108).

2. The method of claim 1, wherein the step of accessing the resource further comprises:
receiving the authorization credential from the secondary client device (108); and
using the authorization credential to receive authorization to access the resource (139).

3. The method of claim 2, wherein using the authorization credential to receive authorization to access the resource comprises transmitting the authorization credential to a distribution service (137) executing on a network server (103) that will provide authorization to access the resource upon authenticating the authorization credential.

4. The method of claim 2 or 3, wherein the resource (139) is stored in a secure format in a memory of the primary client device (106); and
wherein using the authorization credential to receive authorization to access the resource (139) comprises using the authorization credential to access the resource from the memory.

5. The method of any one of the preceding claims, wherein the primary client device (106) and the secondary client device (108) are selected from the group comprising a desktop computer, a laptop computer, a personal digital assistant, a cellular telephone, a set-top box, a music player, a web pad, a tablet computer system and a game console.

6. A primary client device (106), comprising:
a network connectivity interface for enabling communication via a network (109) between the primary client device (106) and an authorization service (136) executing on a network server (103);
a memory for storing a client side application (123); and
a processor communicatively coupled to the memory for executing said client side application (123), wherein said client side application (123) comprises executable instructions that when executed cause the primary client device (106) to:
transmit to the authorization service (136), via the network connectivity interface, a request for access to a resource (139),
receive from the authorization service (136), via the network connectivity interface, an indication that the primary client device (106) must comply with a distribution rule (145) associated with the resource (139)
determine that the primary client device (106) complies with the distribution rule (145), and
in response to determining that the primary client device (106) complies with the distribution rule (145), access the resource (139);
**characterised in that:**
the distribution rule (145) requires a specified secondary client device (108) to be in communication with the primary client device (106) through a direct wireless network as a prerequisite to accessing the resource; and
accessing the resource comprises communicating with the specified secondary client device (108) to gain access to the resource using an authorization credential (166) which has been received from the authorization service at the specified secondary client device (108).

7. The primary client device of claim 6, wherein the client side application (123) further comprises executable instructions to:
receive a secure copy of the resource (139) and store the secure copy in the memory; and
communicate with the secondary client device (108), via the network connectivity interface, to gain access to the secure copy of the resource (139);
wherein the secure copy of the resource comprises an encrypted resource; and
wherein communicating with the secondary client device (108) to gain access to the secure copy of the resource (139) comprises receiving from the secondary device (108) a decryption key and using the decryption key to decrypt the encrypted resource.

8. The primary client device of claim 7, wherein the secure copy of the resource comprises an encrypted resource; and
wherein communicating with the secondary client device (108) to gain access to the secure copy of the resource (139) comprises transmitting the encrypted resource to the secondary device (108) and receiving a decrypted copy of the resource from the secondary client device (108).

9. The primary client device of claim 7 or 8, wherein the secondary client device (108) is arranged to receive a decryption key for decrypting the encrypted resource from the authorization service (136).

10. The primary client device of claim 9, wherein communicating with the secondary client device (108) to gain access to the secure copy of the resource (139) comprises receiving from the secondary device (108) an authorization credential required for accessing the secure copy of the resource (139).

11. A network server (103), comprising:
a network connectivity interface for enabling communication via a network (109) between the network server (103) and a client side application (123) executed by a primary client device (106), and between the network server (103) and a secondary client device (108);
a memory for storing a secure copy of a resource (139), an authorization service (136), and at least one distribution rule (145);
a processor communicatively coupled to the memory for executing said authorization service (136), wherein said authorization service (136) comprises executable instructions that when executed cause the network server (103) to:
receive from the client side application (123), via the network connectivity interface, a request for access to the resource (139),
determine that the distribution rule (145) is associated with the resource (139), and
transmit to the client side application (123), via the network connectivity interface, an indication that the primary client device (106) must comply with the distribution rule (145) so that the client side application (123) can determine whether the primary client device (106) complies with the distribution rule (145),
**characterised in that:**
the distribution rule (145) requires a specified secondary client device (108) to be in communication with the primary client device (106) through a direct wireless network as a prerequisite to accessing the resource and an authorization credential (166) is sent from the authorization service (136) to the specified secondary client device (108) whereby, when the primary client device (106) determines that the primary client device (106) is in compliance with the distribution rule (145), the primary client device (106) communicates with the specified secondary client device (108) to gain access to the resource using the authorization credential (166).

12. The network server of claim 11, wherein the authorization service (136) further comprises executable instructions for authenticating at least one of user credentials and a device identifier received from the client side application (123) via the network connectivity interface.

13. The network server of claim 12, wherein authenticating at least one of user credentials and a device identifier comprises determining that at least one of the user credentials and the device identifier is associated with the resource (139).

14. The network server of claim 11, 12 or 13, wherein the authorization service (136) further comprises executable instructions for authenticating at least one of user credentials and a device identifier received from the secondary client device (108) via the network connectivity interface.

15. The network server of any of claims 11 to 14, wherein the authorization service (136) further comprises executable instructions to:
receive from the secondary client device (108), via the network connectivity interface, a request for an authorization credential required for accessing the secure copy of the resource (139), and
in response to receiving the request, transmit the authorization credential to the secondary client device (108) via the network connectivity interface; and
wherein the authorization credential comprises a decryption key to decrypt the secure copy of the resource (139).

## Patentansprüche

1. Verfahren zum Zugreifen auf eine Ressource (139), wobei das Verfahren von einer clientseitigen Anwendung (123) durchgeführt wird, die auf einem primären Client-Gerät (106) ausgeführt wird, wobei das Verfahren Folgendes umfasst:
Übertragen einer Anfrage an einen Autorisierungsdienst (136), der auf einem Netzwerkserver (103) ausgeführt wird, für den Zugriff auf eine Ressource (139);
Empfangen, vom Autorisierungsdienst (136), eines Hinweises, dass das primäre Client-Gerät (106) eine mit der Ressource (139) verbundene Verteilungsregel (145) einhalten muss;
Bestimmen, dass das primäre Client-Gerät (106) die Verteilungsregel (145) einhält; und
als Antwort auf das Bestimmen, dass das primäre Client-Gerät (106) die Verteilungsregel (145) einhält, Zugreifen auf die Ressource (139);
**dadurch gekennzeichnet, dass:**
die Verteilungsregel (145) erfordert, dass ein spezifiziertes sekundäres Client-Gerät (108) als Voraussetzung für den Zugriff auf die Ressource über ein direktes Drahtlosnetzwerk mit dem primären Client-Gerät (106) in Kommunikation steht; und
das Zugreifen auf die Ressource das Kommunizieren mit dem spezifizierten sekundären Client-Gerät (108) umfasst, um durch Verwendung eines Berechtigungsnachweises (166), der von dem Autorisierungsdienst (136) an dem spezifizierten sekundären Client-Gerät (108) empfangen wurde, Zugriff auf die Ressource zu erhalten.

2. Verfahren nach Anspruch 1, wobei der Schritt des Zugreifens auf die Ressource ferner Folgendes umfasst:
Empfangen des Berechtigungsnachweises von dem sekundären Client-Gerät (108); und
Verwenden des Berechtigungsnachweises, um die Berechtigung zum Zugreifen auf die Ressource (139) zu empfangen.

3. Verfahren nach Anspruch 2, wobei das Verwenden des Berechtigungsnachweises zum Empfangen der Berechtigung zum Zugreifen auf die Ressource das Übertragen des Berechtigungsnachweises an einen Verteilungsdienst (137) umfasst, der auf einem Netzwerkserver (103) ausgeführt wird, der nach Authentifizierung des Berechtigungsnachweises die Berechtigung zum Zugreifen auf die Ressource bereitstellt.

4. Verfahren nach Anspruch 2 oder 3, wobei die Ressource (139) in einem sicheren Format in einem Speicher des primären Client-Gerätes (106) gespeichert wird; und
wobei das Verwenden des Berechtigungsnachweises, um die Berechtigung zum Zugreifen auf die Ressource (139) zu empfangen, das Verwenden des Berechtigungsnachweises zum Zugreifen auf die Ressource aus dem Speicher umfasst.

5. Verfahren nach einem beliebigen der vorhergehenden Ansprüche, wobei das primäre Client-Gerät (106) und das sekundäre Client-Gerät (108) aus der Gruppe ausgewählt werden, die einen Desktop-Computer, einen Laptop-Computer, einen persönlichen digitalen Assistenten, ein Mobiltelefon, eine Set-Top-Box, einen Musikspieler, ein Web-Pad, ein Tablet-Computersystem und eine Spielkonsole umfasst.

6. Primäres Client-Gerät (106), das Folgendes umfasst:
eine Netzwerkverbindungsschnittstelle zum Ermöglichen der Kommunikation über ein Netzwerk (109) zwischen dem primären Client-Gerät (106) und einem Autorisierungsdienst (136), der auf einem Netzwerkserver (103) ausgeführt wird;
einen Speicher zum Speichern einer clientseitigen Anwendung (123); und
einen kommunikativ mit dem Speicher gekoppelten Prozessor zum Ausführen der clientseitigen Anwendung (123), wobei die clientseitige Anwendung (123) ausführbare Anweisungen umfasst, die, wenn sie ausgeführt werden, das primäre Client-Gerät (106) zu Folgendem veranlassen:
Übertragen, an den Autorisierungsdienst (136), über die Netzwerkverbindungsschnittstelle, einer Anfrage für den Zugriff auf eine Ressource (139),
Empfangen, vom Autorisierungsdienst (136), über die Netzwerkverbindungsschnittstelle, eines Hinweises, dass das primäre Client-Gerät (106) eine mit der Ressource (139) verbundene Verteilungsregel (145) einhalten muss,
Bestimmen, dass das primäre Client-Gerät (106) die Verteilungsregel (145) einhält, und
als Antwort auf das Bestimmen, dass das primäre Client-Gerät (106) die Verteilungsregel (145) einhält, Zugreifen auf die Ressource (139);
**dadurch gekennzeichnet, dass:**
die Verteilungsregel (145) erfordert, dass ein spezifiziertes sekundäres Client-Gerät (108) als Voraussetzung für den Zugriff auf die Ressource über ein direktes Drahtlosnetzwerk mit dem primären Client-Gerät (106) in Kommunikation steht; und
das Zugreifen auf die Ressource das Kommunizieren mit dem spezifizierten sekundären Client-Gerät (108) umfasst, um durch Verwendung eines Berechtigungsnachweises (166), der von dem Autorisierungsdienst an dem spezifizierten sekundären Client-Gerät (108) empfangen wurde, Zugriff auf die Ressource zu erhalten.

7. Primäres Client-Gerät nach Anspruch 6, wobei die clientseitige Anwendung (123) ferner ausführbare Anweisungen umfasst, um Folgendes durchzuführen:
Empfangen einer sicheren Kopie der Ressource (139), und Speichern der sicheren Kopie in dem Speicher; und
Kommunizieren mit dem sekundären Client-Gerät (108), über die Netzwerkverbindungsschnittstelle, um Zugriff auf die sichere Kopie der Ressource (139) zu erhalten;
wobei die sichere Kopie der Ressource eine verschlüsselte Ressource umfasst; und
wobei das Kommunizieren mit dem sekundären Client-Gerät (108), um Zugriff auf die sichere Kopie der Ressource (139) zu erhalten, das Empfangen eines Entschlüsselungsschlüssels von dem sekundären Gerät (108) und das Verwenden des Entschlüsselungsschlüssels zum Entschlüsseln der verschlüsselten Ressource umfasst.

8. Primäres Client-Gerät nach Anspruch 7, wobei die sichere Kopie der Ressource eine verschlüsselte Ressource umfasst; und
wobei das Kommunizieren mit dem sekundären Client-Gerät (108), um Zugriff auf die sichere Kopie der Vorrichtung (139) zu erlangen, das Übertragen der verschlüsselten Ressource an das sekundäre Gerät (108) und das Empfangen einer entschlüsselten Kopie der Ressource von dem sekundären Client-Gerät (108) umfasst.

9. Primäres Client-Gerät nach Anspruch 7 oder 8, wobei das sekundäre Client-Gerät (108) dazu eingerichtet ist, einen Entschlüsselungsschlüssel zum Entschlüsseln der verschlüsselten Ressource von dem Autorisierungsdienst (136) zu empfangen.

10. Primäres Client-Gerät nach Anspruch 9, wobei das Kommunizieren mit dem sekundären Client-Gerät (108), um Zugriff auf die sichere Kopie der Ressource (139) zu erhalten, das Empfangen eines Berechtigungsnachweises von dem sekundären Gerät (108) umfasst, der für den Zugriff auf die sichere Kopie der Ressource (139) erforderlich ist.

11. Netzwerkserver (103), der Folgendes umfasst:
eine Netzwerkverbindungsschnittstelle zum Ermöglichen der Kommunikation über ein Netzwerk (109) zwischen dem Netzwerkserver (103) und einer clientseitigen Anwendung (123), die von einem primären Client-Gerät (106) ausgeführt wird, und zwischen dem Netzwerkserver (103) und einem sekundären Client-Gerät (108);
einen Speicher zum Speichern einer sicheren Kopie einer Ressource (139), einen Autorisierungsdienst (136) und mindestens eine Verteilungsregel (145);
einen Prozessor, der kommunikativ mit dem Speicher gekoppelt ist, um den Autorisierungsdienst (136) auszuführen, wobei der Autorisierungsdienst (136) ausführbare Anweisungen umfasst, die, wenn sie ausgeführt werden, den Netzwerkserver (103) zu Folgendem veranlassen:
Empfangen, von der clientseitigen Anwendung (123), über die Netzwerkverbindungsschnittstelle, einer Anfrage für Zugriff auf die Ressource (139),
Bestimmen, dass die Verteilungsregel (145) mit der Ressource (139) verbunden ist, und
Übertragen, an die clientseitige Anwendung (123), über die Netzwerkverbindungsschnittstelle, eines Hinweises, dass das primäre Client-Gerät (106) die Verteilungsregel (145) einhalten muss, so dass die clientseitige Anwendung (123) bestimmen kann, ob das primäre Client-Gerät (106) die Verteilungsregel (145) einhält,
**dadurch gekennzeichnet, dass:**
die Verteilungsregel (145) erfordert, dass ein spezifiziertes sekundäres Client-Gerät (108) als Voraussetzung für den Zugriff auf die Ressource über ein direktes Drahtlosnetzwerk mit dem primären Client-Gerät (106) in Kommunikation steht, und
ein Berechtigungsnachweis (166) von dem Autorisierungsdienst (136) an das angegebene sekundäre Client-Gerät (108) gesendet wird, wodurch,
wenn das primäre Client-Gerät (106) bestimmt, dass das primäre Client-Gerät (106) in Übereinstimmung mit der Verteilungsregel (145) ist, das primäre Client-Gerät (106) mit dem spezifizierten sekundären Client-Gerät (108) kommuniziert, um Zugriff auf die Ressource durch Verwendung des Berechtigungsnachweises (166) zu erlangen.

12. Netzwerkserver nach Anspruch 11, wobei der Autorisierungsdienst (136) ferner ausführbare Anweisungen zur Authentifizierung mindestens eines von Benutzeranmeldeinformationen und einer Gerätekennung aufweist, die von der clientseitigen Anwendung (123) über die Netzwerkverbindungsschnittstelle empfangen werden.

13. Netzwerkserver nach Anspruch 12, wobei die Authentifizierung mindestens eines von Benutzeranmeldeinformationen und einer Gerätekennung das Bestimmen umfasst, dass mindestens eine der Benutzeranmeldeinformationen und der Gerätekennung mit der Ressource (139) verbunden ist.

14. Netzwerkserver nach Anspruch 11, 12 oder 13, wobei der Autorisierungsdienst (136) ferner ausführbare Anweisungen zur Authentifizierung mindestens eines von Benutzeranmeldeinformationen und einer Gerätekennung aufweist, die von dem sekundären Client-Gerät (108) über die Netzwerkverbindungsschnittstelle empfangen werden.

15. Netzwerkserver nach einem der Ansprüche 11 bis 14, wobei der Autorisierungsdienst (136) ferner ausführbare Anweisungen für Folgendes umfasst:
Empfangen, von dem sekundären Client-Gerät (108), über die Netzwerkverbindungsschnittstelle, einer Anfrage für einen Berechtigungsnachweis, der zum Zugreifen auf die sichere Kopie der Ressource (139) erforderlich ist, und
als Antwort auf das Empfangen der Anfrage, Übertragen des Berechtigungsnachweises an das sekundäre Client-Gerät (108) über die Netzwerkverbindungsschnittstelle; und
wobei der Berechtigungsnachweis einen Entschlüsselungsschlüssel zum Entschlüsseln der sicheren Kopie der Ressource (139) aufweist.

## Revendications

1. Procédé d'accès à une ressource (139), le procédé étant mis en œuvre par une application côté client (123) exécutée sur un dispositif client principal (106), le procédé comprenant :
la transmission d'une demande à un service d'autorisation (136) s'exécutant sur un serveur de réseau (103) pour accéder à une ressource (139) ;
la réception en provenance du service d'autorisation (136) d'une indication selon laquelle le dispositif client principal (106) doit se conformer à une règle de distribution (145) associée à la ressource (139) ;
la détermination du fait que le dispositif client principal (106) se conforme à la règle de distribution (145) ; et
en réponse à la détermination du fait que le dispositif client principal (106) se conforme à la règle de distribution (145), l'accès à la ressource (139) ;
**caractérisé en ce que** :
la règle de distribution (145) exige qu'un dispositif client secondaire spécifié (108) soit en communication avec le dispositif client principal (106) par l'intermédiaire d'un réseau sans fil direct comme condition préalable à l'accès à la ressource ; et
l'accès à la ressource comprend la communication avec le dispositif client secondaire (108) spécifié pour obtenir l'accès à la ressource en utilisant un justificatif d'autorisation (166) qui a été reçu en provenance du service d'autorisation (136) sur le dispositif client secondaire (108) spécifié.

2. Procédé selon la revendication 1, dans lequel l'étape d'accès à la ressource comprend en outre :
la réception du justificatif d'autorisation en provenance du dispositif client secondaire (108) ; et
l'utilisation du justificatif d'autorisation pour recevoir l'autorisation d'accéder à la ressource (139).

3. Procédé selon la revendication 2, dans lequel l'utilisation du justificatif d'autorisation pour recevoir une autorisation d'accès à la ressource comprend la transmission du justificatif d'autorisation à un service de distribution (137) s'exécutant sur un serveur de réseau (103) qui fournira l'autorisation d'accéder à la ressource après authentification du justificatif d'autorisation.

4. Procédé selon la revendication 2 ou 3, dans lequel la ressource (139) est stockée dans un format sécurisé dans une mémoire du dispositif client principal (106) ; et dans lequel l'utilisation du justificatif d'autorisation pour recevoir l'autorisation d'accéder à la ressource (139) comprend l'utilisation du justificatif d'autorisation pour accéder à la ressource depuis la mémoire.

5. Procédé selon l'une quelconque des revendications précédentes, dans lequel le dispositif client principal (106) et le dispositif client secondaire (108) sont sélectionnés dans le groupe comprenant un ordinateur de bureau, un ordinateur portable, un assistant numérique personnel, un téléphone cellulaire, un décodeur, un lecteur de musique, un bloc-notes Web, un système d'ordinateur tablette et une console de jeu.

6. Dispositif client principal (106), comprenant :
une interface de connectivité réseau pour permettre une communication par l'intermédiaire d'un réseau (109) entre le dispositif client principal (106) et un service d'autorisation (136) s'exécutant sur un serveur de réseau (103) ;
une mémoire pour stocker une application côté client (123) ; et
un processeur couplé par voie de communication à la mémoire pour exécuter ladite application côté client (123), dans lequel ladite application côté client (123) comprend des instructions exécutables qui, lorsqu'elles sont exécutées, amènent le dispositif client principal (106) à :
transmettre au service d'autorisation (136), par l'intermédiaire de l'interface de connectivité réseau, une demande d'accès à une ressource (139),
recevoir en provenance du service d'autorisation (136), par l'intermédiaire de l'interface de connectivité réseau, une indication selon laquelle le dispositif client principal (106) doit se conformer à une règle de distribution (145) associée à la ressource (139),
déterminer que le dispositif client principal (106) se conforme à la règle de distribution (145), et
en réponse à la détermination du fait que le dispositif client principal (106) se conforme à la règle de distribution (145), accéder à la ressource (139) ;
**caractérisé en ce que** :
la règle de distribution (145) exige qu'un dispositif client secondaire (108) spécifié soit en communication avec le dispositif client principal (106) par l'intermédiaire d'un réseau sans fil direct comme condition préalable à l'accès à la ressource ; et
l'accès à la ressource comprend la communication avec le dispositif client secondaire (108) spécifié pour obtenir l'accès à la ressource en utilisant un justificatif d'autorisation (166) qui a été reçu en provenance du service d'autorisation sur le dispositif client secondaire (108) spécifié.

7. Dispositif client principal selon la revendication 6, dans lequel l'application côté client (123) comprend en outre des instructions exécutables pour :
recevoir une copie sécurisée de la ressource (139) et stocker la copie sécurisée dans la mémoire ; et
communiquer avec le dispositif client secondaire (108), par l'intermédiaire de l'interface de connectivité réseau, pour accéder à la copie sécurisée de la ressource (139) ; dans lequel la copie sécurisée de la ressource comprend une ressource chiffrée ; et
dans lequel la communication avec le dispositif client secondaire (108) pour accéder à la copie sécurisée de la ressource (139) comprend la réception en provenance du dispositif secondaire (108) d'une clé de déchiffrement et l'utilisation de la clé de déchiffrement pour déchiffrer la ressource chiffrée.

8. Dispositif client principal selon la revendication 7, dans lequel la copie sécurisée de la ressource comprend une ressource chiffrée ; et
dans lequel la communication avec le dispositif client secondaire (108) pour accéder à la copie sécurisée de la ressource (139) comprend la transmission de la ressource chiffrée au dispositif secondaire (108) et la réception d'une copie déchiffrée de la ressource en provenance du dispositif client secondaire (108).

9. Dispositif client principal selon la revendication 7 ou 8, dans lequel le dispositif client secondaire (108) est conçu pour recevoir une clé de déchiffrement pour déchiffrer la ressource chiffrée en provenance du service d'autorisation (136).

10. Dispositif client principal selon la revendication 9, dans lequel la communication avec le dispositif client secondaire (108) pour accéder à la copie sécurisée de la ressource (139) comprend la réception en provenance du dispositif secondaire (108) d'un justificatif d'autorisation exigé pour accéder à la copie sécurisée de la ressource (139).

11. Serveur de réseau (103), comprenant :
une interface de connectivité réseau pour permettre la communication par l'intermédiaire d'un réseau (109) entre le serveur de réseau (103) et une application côté client (123) exécutée par un dispositif client principal (106), et entre le serveur de réseau (103) et un dispositif client secondaire (108) ;
une mémoire pour stocker une copie sécurisée d'une ressource (139), un service d'autorisation (136), et au moins une règle de distribution (145) ;
un processeur couplé par voie de communication à la mémoire pour exécuter ledit service d'autorisation (136),
dans lequel ledit service d'autorisation (136) comprend des instructions exécutables qui, lorsqu'elles sont exécutées, amènent le serveur de réseau (103) à :
recevoir en provenance de l'application côté client (123), par l'intermédiaire de l'interface de connectivité réseau, une demande d'accès à la ressource (139),
déterminer que la règle de distribution (145) est associée à la ressource (139), et
transmettre à l'application côté client (123), par l'intermédiaire de l'interface de connectivité réseau, une indication selon laquelle le dispositif client principal (106) doit se conformer à la règle de distribution (145) de manière à ce que l'application côté client (123) puisse déterminer si le dispositif client principal (106) se conforme à la règle de distribution (145),
**caractérisé en ce que** :
la règle de distribution (145) exige qu'un dispositif client secondaire spécifié (108) soit en communication avec le dispositif client principal (106) par l'intermédiaire d'un réseau sans fil direct comme condition préalable à l'accès à la ressource et
un justificatif d'autorisation (166) est envoyé par le service d'autorisation (136) au dispositif client secondaire (108) spécifié de sorte que,
lorsque le dispositif client principal (106) détermine que le dispositif client principal (106) se conforme à la règle de distribution (145), le dispositif client principal (106) communique avec le dispositif client secondaire (108) spécifié pour accéder à la ressource en utilisant le justificatif d'autorisation (166).

12. Serveur de réseau selon la revendication 11, dans lequel le service d'autorisation (136) comprend en outre des instructions exécutables pour authentifier au moins l'un de justificatifs d'utilisateur et d'un identifiant de dispositif reçus en provenance de l'application côté client (123) par l'intermédiaire de l'interface de connectivité réseau.

13. Serveur de réseau selon la revendication 12, dans lequel l'authentification d'au moins l'un de justificatifs d'utilisateur et d'un identifiant de dispositif comprend la détermination du fait qu'au moins l'un des justificatifs d'utilisateur et de l'identifiant du dispositif est associé à la ressource (139).

14. Serveur de réseau selon la revendication 11, 12 ou 13, dans lequel le service d'autorisation (136) comprend en outre des instructions exécutables pour authentifier au moins l'un de justificatifs d'utilisateur et d'un identifiant de dispositif reçus en provenance du dispositif client secondaire (108) par l'intermédiaire de l'interface de connectivité réseau.

15. Serveur de réseau selon l'une quelconque des revendications 11 à 14, dans lequel le service d'autorisation (136) comprend en outre des instructions exécutables pour :
recevoir en provenance du dispositif client secondaire (108), par l'intermédiaire de l'interface de connectivité réseau, une demande de justificatif d'autorisation exigé pour accéder à la copie sécurisée de la ressource (139) et,
en réponse à la réception de la demande, transmettre le justificatif d'autorisation au dispositif client secondaire (108) par l'intermédiaire de l'interface de connectivité réseau ; et
dans lequel le justificatif d'autorisation comprend une clé de déchiffrement permettant de déchiffrer la copie sécurisée de la ressource (139).
